# EUROPEAN PATENT SPECIFICATION

(11) **EP 1 200 258 B1**
(45) Date of publication and mention of the grant of the patent: **02.06.2004**
(21) Application number: 00907861.9
(22) Date of filing: 09.03.2000
(51) Int. Cl.: B32B 27/12, B32B 5/28, A43B 1/00

(54) **LAMINAR MATERIALS SUITABLE FOR USE IN THE MANUFACTURE OF SHOES, METHOD OF MAKING SAME AND SHOE STIFFENER MATERIALS INCLUDING SAID LAMINAR MATERIALS**
FÜR SCHUHE GEEIGNETER VERBUNDWERKSTOFF, VERFAHREN ZUR DESSEN HERSTELLUNG SOWIE DEN VERBUNDWERKSTOFF BEINHALTENDE SCHUHEINLAGEN
MATERIAUX LAMELLAIRES CONCUS POUR LA FABRICATION DE CHAUSSURES, LEUR PROCEDE DE PREPARATION ET MATERIAUX DE RAIDISSEMENT DE CHAUSSURE COMPRENANT CES MATERIAUX LAMELLAIRES

(30) Priority: 10.03.1999 GB 9905382
(43) Date of publication of application: 02.05.2002
(73) Proprietor: Texon UK Limited, Leicester LE4 5BX (GB); TEXON MATERIALES, S.L., 08005 Barcelona (ES)
(72) Inventor: ARNOLD, Brian, Syston, Leicester LE72AL (GB); PARKER, Gareth, Nuneaton, Warwickshire CV10 0BG (GB)
(86) International application number: PCT/GB2000/000863
(87) International publication number: WO 2000/053416

(56) References cited:
- WO-A-96/01734
- GB-A- 1 590 827
- GB-A- 2 306 392
- US-A- 4 054 706
- US-A- 4 602 442

## Description

### Technical Field

This invention is concerned with laminar materials suitable for use in the manufacture of shoes, methods of making the same and shoe components comprising said laminar materials, especially shoe toe and heel end stiffeners and shoe insoles.

The term "shoe" where used herein is intended to denote outer footwear generally whether ready for wear or in the course of manufacture.

### Background Art

In the manufacture of shoes it is common practice to include at the toe or heel end portion of the shoe, shoe stiffeners commonly referred to as toe puffs or counters respectively. The purpose of the stiffeners is to provide adequate support to the material of the shoe upper to retain the shoe in shape, for example during wear. Toe puff and counter materials commonly have a degree of stiffness and resilience, the stiffness being necessary to retain the uppers in a desired shape and the resilience being required to return the shoe to the desired shape should the upper be deformed for any reason.

It is well know to those skilled in the art that such shoe stiffeners may be cut from sheet shoe stiffener materials in a suitable shape for incorporation into a shoe upper. As a result of cutting the shoe stiffeners from the sheet material, scrap sheet material remains which has openings in it corresponding to the shape of the shoe stiffener. Such scrap material has, in the past, been disposed of as waste, eg in land fill sites because there has been no convenient way to re-use this scrap material efficiently. This especially has been the case with impregnated fibre fabric shoe stiffener materials and with stiffener materials consisting of fibre fabrics laminated with extruded thermoplastics sheets (both of which have been extensively used in the manufacture of shoes). On the contrary, scrap from shoe stiffener materials made solely from extruded plastics sheet can be relatively easily recycled, in comparison with those based on latex-impregnated fabrics and fabric film laminates which do not have suitable thermoplastic/melt characteristics.

### Disclosure of the invention

One of the various objects of the present invention is to provide an improved laminar material suitable for use in the manufacture of shoes.

Another of the various objects of the present is to provide an improved laminar material which can incorporate cutting scrap (which arises when shoe components are cut from laminar material) back into new product.

The applicant company has for many years produced a heel end shoe stiffener material consisting of an extruded- thermoplastic core laminated on each side to a non-woven fibre fabric impregnated with a polymeric thermoplastic stiffening material and coated on both sides with a suitable hot-melt adhesive, for example based on ethylene-vinyl acetate copolymer. It has surprisingly been found that it is possible to granulate and re-use cutting scrap from this type of material in the manufacture of a generally similar material, except that the thermoplastic core includes not only virgin polymeric thermoplastics material but also the granulated cutting scrap.

The invention may be considered to provide, in one aspect, a laminar material suitable for use in the manufacture of shoes comprising an extruded thermoplastic sheet core having laminated thereto on at least one side a fibre fabric layer, the thermoplastic sheet core comprising a mixture of granulated scrap shoe stiffener material with virgin extrudable thermoplastics material, the core including at least 40% by weight of thermoplastics material.

Preferably in a laminar material in accordance with the invention the (or each) fibre fabric layer is a non-woven fabric, preferably a needled non-woven fabric of a type well known to those skilled in the art. Any suitable fibres may be used but the preferred fibres are polyester of about 6-7 decitex. Preferably, the fibre fabric layer is impregnated with a polymeric thermoformable stiffening material; suitable materials are well known to those skilled in the art and may include, for example, high styrene content styrene butadiene copolymers.

A laminar material in accordance with the invention suitable for use as a shoe heel or toe end stiffener preferably has a hot-melt adhesive coating on the surface of the fabric layer remote from the thermoplastic core.

A preferred laminar material in accordance with the invention has a fibre fabric layer laminated to each side of the thermoplastic core.

In a laminar material in accordance with the invention the amount of virgin extrudable thermoplastics material included in the core is sufficient to provide satisfactory melt characteristics for extrusion of the mixture of granulated scrap shoe stiffener material and virgin thermoplastics material to provide the thermoplastic core. The amount of virgin thermoplastics material required is dependent to some extent on the amount of extrudable thermoplastics material present in the scrap shoe stiffener material. At least 40% by weight extrudable thermoplastics material appears to be necessary for satisfactory performance. For many materials 40% by weight of virgin thermoplastics material is necessary. Although as much virgin thermoplastics material as is necessary may be used in order to provide suitable properties it is desirable to use no more than 60% virgin thermoplastics material, otherwise it may prove to be impossible to re-use all of the scrap material, thus reducing the overall efficiency of the process.

In the manufacture of a laminar material in accordance with the invention it is, of course, important that the thermoplastics components used in the adhesive and in the core material are compatible with one another so that the performance of the finished product is consistent.

In one laminar material in accordance with the invention the shoe stiffener material which is granulated to provide the scrap comprises a core of extruded thermoplastics sheet material having laminated to both sides a fibre fabric layer impregnated with a polymeric stiffening material the fabric layers each having a heat-activatable adhesive coating.

In a preferred laminar material in accordance with the invention the material which is granulated to provide the scrap has the same general construction and composition as the laminar material.

Preferably in a laminar material in accordance with the invention the virgin thermoplastics material is substantially the same as the extrudable thermoplastics material in the core of the scrap shoe stiffener material. In a laminar material in accordance with the invention the core conveniently comprises from 30 % to 50 % by weight of the total weight of laminar material.

A laminar material in accordance with the invention may conveniently be used to provide a shoe toe or heel end stiffener. Laminar materials in accordance with the invention may also be used in the manufacture of shoe insoles which are also relatively stiff components. Insole materials of appropriate composition may also be recycled and are included in the term "stiffener material" where referring to the invention in its broadest aspects.

In another aspect the invention may be considered to provide a method of making a laminar material comprising the steps of:-
(i) procuring scrap shoe stiffener material
(ii) granulating the scrap material
(iii) mixing the granulated scrap material with virgin extrudable thermoplastics material sufficient to provide at least 40 % by weight of extrudable thermoplastics material
(iv) melting the virgin thermoplastics material and thermoplastics material in the scrap and extruding the molten mixture of virgin thermoplastics material and scrap material to form a thermoplastic sheet core; and
(v) laminating a fibre fabric with the mixture as it is extruded to form the sheet core whereby to provide a fibre fabric layer on at least one surface of the core.
   Preferably a method in accordance with the invention comprises the further steps of
(vi) impregnating the fibre fabric layer or layers of the laminate produced by step (v) with a polymeric thermoformable stiffening material in fluid form; and
(vii) drying, cooling or curing the fluid impregnant to provide a thermoplastics stiffening material impregnating the fibre fabric layers.

Preferred polymeric thermoformable stiffening materials are aqueous dispersions of a high styrene content thermoformable polymeric material, for example styrene-butadiene copolymer comprising 80% by weight styrene. Such materials are well known to those skilled in the manufacture of shoe stiffener materials. Alternatively, the polymeric stiffening material may be applied in the form of a solution or by reacting liquid components which themselves react to form a thermoformable polymeric stiffening material. The liquid polymeric stiffening material may conveniently be applied by passing the laminate through an impregnating apparatus of known construction in which the laminate is fed through an impregnant bath in which the liquid stiffening material is absorbed by the fabric layers and then passed through the nip between a pair of calendar rollers to control the amount of liquid material retained in the fabric layers.

A method in accordance with the invention also preferably comprises the further step of (viii) applying a coating of hot-melt adhesive composition to the surface of the fibre fabric layer or layers. Any suitable hot-melt adhesive composition may be used, for example an ethylene-vinyl acetate copolymer hot-melt adhesive. Whereas, in a preferred method in accordance with the invention, the fabric layers are impregnated with stiffener composition after they have been laminated to the thermoplastic core, the fabric layers may be impregnated with the stiffener material before lamination to the core, the fabric layers having been dried prior to lamination with the core.

There now follows a detailed description, to be read with reference to the accompany drawing of a laminar material, a method of making the material and a shoe stiffener made of the material, embodying the invention. It will be realised that this material, method and stiffener have been selected for description to illustrate the invention by way of example.

### Brief Description of the Drawings

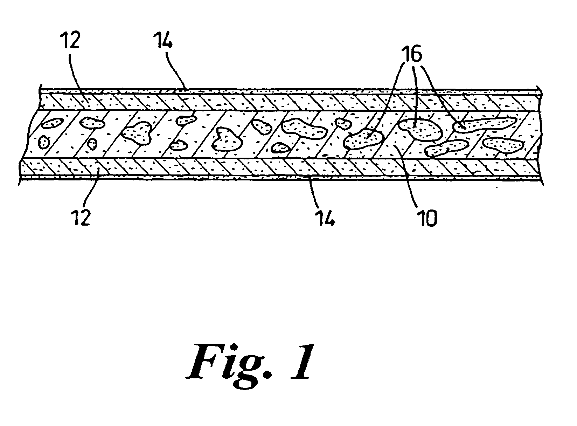

In the accompanying drawing Figure 1 is a partial view in section of a laminar material embodying the invention.

### Modes of Carrying Out the Invention

Figure 1 shows a laminar material suitable for use in the manufacture of shoes and, especially, suitable for use in the manufacture of heel end shoe stiffeners. Properties of two illustrative materials are set out in Table 1, together with properties of a previously known product for comparison. These illustrative materials each comprise an extruded thermoplastic sheet core 10 having laminated thereto on each side a fibre fabric layer 12. An ethylene-vinyl acetate hot-melt adhesive layer 14 is applied onto the outer surfaces of both fibre fabric layers 12. Other hot-melt adhesive materials may be used if desired.

In the illustrative laminar materials the thermoplastic sheet core 10 comprises a mixture of granulated scrap shoe stiffener material with virgin extrudable thermoplastics material, the core including at least 40 % by weight of extrudable thermoplastics material. The granulated scrap shoe stiffener material is cutting scrap produced from a material which is of generally similar construction to the illustrative laminar material except that the central thermoplastics core does not comprise any scrap material but is of virgin polymeric thermoplastics material. In this scrap material, the polymeric material of the core comprises 70% by weight ethylene-vinyl acetate copolymer and 30% by weight polypropylene. In order to vary the stiffness of the thermoplastic core the proportion of ethylene-vinyl acetate copolymer to polypropylene may be varied - higher relative amounts of polypropylene produce a stiffer core material. A balance must be struck between stiffness, moldability in a shoe, shape retention and general wear characteristics. Other thermoplastics materials may be used in shoe stiffener materials which may be used to provide the scrap, (for example the ionomeric resin supplied under the trade name Surlyn) provided that the thermoplastics polymeric material which provides the core has appropriate melt and stiffness characteristics.

In order to produce the illustrative materials in carrying out a method in accordance with the invention, the cutting scrap remaining from a sheet of shoe stiffener material, following cutting out of shoe stiffeners, is chopped up in a suitable apparatus, namely an Erema thermoplastic recycling machine which comprises a chopping arrangement in conjunction with an extruder. The scrap is first chopped up without causing the material to overheat (which might cause the adhesive coating on the material to be activated and stick the particles of chopped material together to form a block), commonly referred to as "blocking". Prevention of blocking may be achieved by any convenient means, for example by controlling cutter power and feed rate of raw material and/or by the addition of another material, e.g. mineral filler that militates against blocking and allows more vigorous cutting.

The chopped material is fed directly to a pelletising extruder which supplies the scrap material as a granulate or pellet of a size suitable for use in a plastics sheet extruding apparatus. The scrap granules are then mixed with granules of virgin polymeric thermoplastics material of the same composition as the thermoplastics material in the core of the scrap material, namely ethylene-vinyl acetate copolymer blended with polypropylene. The mixed granules (or pellets) are then supplied to the sheet extruder in which they are melted and the melt fully blended and thereafter extruded. The fibre fabric layers are laminated to the extruded thermoplastic sheet core as it leaves the extruder in a manner well known to those skilled in the art.

Although the thermoplastic sheet core of the illustrative laminar materials comprises mainly granulated scrap shoe stiffener material and virgin polymeric thermoplastics material, other components may be included if desired, for example material commonly included in plastics compounds for extrusion purposes, including fillers, plasticizers and antioxidents and pigments if desired.

In the illustrative laminar materials, the thermoplastic sheet core includes particles 16 of fibrous material arising from the granulated scrap stiffener material. The particle size of the fibrous particles 16 varies over a wide range but, in the first illustrative material typical particles 16 are about 2-3mm in lengthwise and transverse dimension and about 0.5mm in thickness; in the second illustrative material particle sizes are about 0.5 mm or less. Nevertheless the lengthwise and transverse dimensions of the particles 16 in materials otherwise similar to the illustrative materials may vary over a wide range and some may be as much 8mm by 5mm in some final products.

The fibre fabric layers 12 of the illustrative laminar materials are needled non-woven fibre fabric layers in which the fibre is a polyester textile fibre of about 6.7 decitex and is produced by needling techniques in a manner well known to those skilled in the art. The impregnant is a high styrene (including about 80% by weight styrene), styrene-butadiene copolymer latex, also well known to those skilled in the shoe stiffener art.

The granules or pellets of scrap material produced by the Erema apparatus are typically between 3mm and 7mm in dimension but as discussed above the granule size is influenced by the operating conditions of the apparatus. Clearly where a relatively thin laminar material is to be made, the apparatus needs to be operated to produce relatively small granules - although part of the granules are thermoplastic material which will melt and mix with the virgin thermoplastics material, the remainder may include clumps of fibre and, possibly, filler which will not melt and will remain as particulate material in the illustrative material.

The production of the granules of scrap material generates fibrous particles 16 which may be considered to act as a filler in the extruded core 10. The dimensions of the fibrous particles have a bearing on the thickness of the extruded thermoplastic sheet core: particle sizes referred to above are used in the manufacture of a core having a weight of about 800 grams per square metre. For lighter weight cores more severe chopping of the scrap shoe stiffener material before producing the scrap granules or pellets would be required (to reduce the average size of the fibrous particles 16). The core of 800 grams per centimetre is rather greater in thickness than the core of the scrap material which does not include any scrap in the manufacture of the core.

Adhesive coating weights are about the same in all cases.

Depending upon the properties required in the final product the weight of the felt non-woven fibre fabric layers and the impregnant content may be varied. In the illustrative laminar materials each non-woven fibre fabric layer may have a weight of about 100 grams per square metre, the weight of impregnant in each of the fibre fabric layers is about 185 grams per square metre and the adhesive layers are each about 130 grams per square metre in weight with an extruded core of about 800 grams per square metre giving a total weight for the first illustrative laminar material of about 1630 grams per square metre. The second illustrative laminar material is similar but has a core of slightly lower weight per square metre.

The scrap sheet stiffener material used in the manufacture of the illustrative laminar material has an extruded thermoplastic core of virgin polymeric thermoplastics material having a weight of about 580 grams per square metre, each of the non-woven fibre fabric layers has a weight of about 125 grams per square metre, the weight of the impregnated polymeric stiffening material in each of the fabric layers is about 205 grams per square metre and the adhesive layers have the same weight, namely 130 grams per square metre giving a total weight of about 1500 grams per square metre. In the scrap material, the amount of available thermoplastics material is the sum of the core film and the adhesive and is about 55 % by weight. The impregnant is thermoformable but is not included as thermoplastics material for this purpose because although it is affected by heat and softened, making it more readily malleable it is not rendered molten in the extrusion process.

The illustrative laminar material is found to be satisfactory for use in the production of shoe heel end stiffeners and has a performance which is generally comparable with the previously known material where the core is of virgin polymeric material and does not include any scrap stiffener material with any fibre content. The accompanying Table 1 gives an indication of a comparison of the illustrative laminar material as outlined above and a previously known heel end shoe stiffening product of the composition and construction noted above.

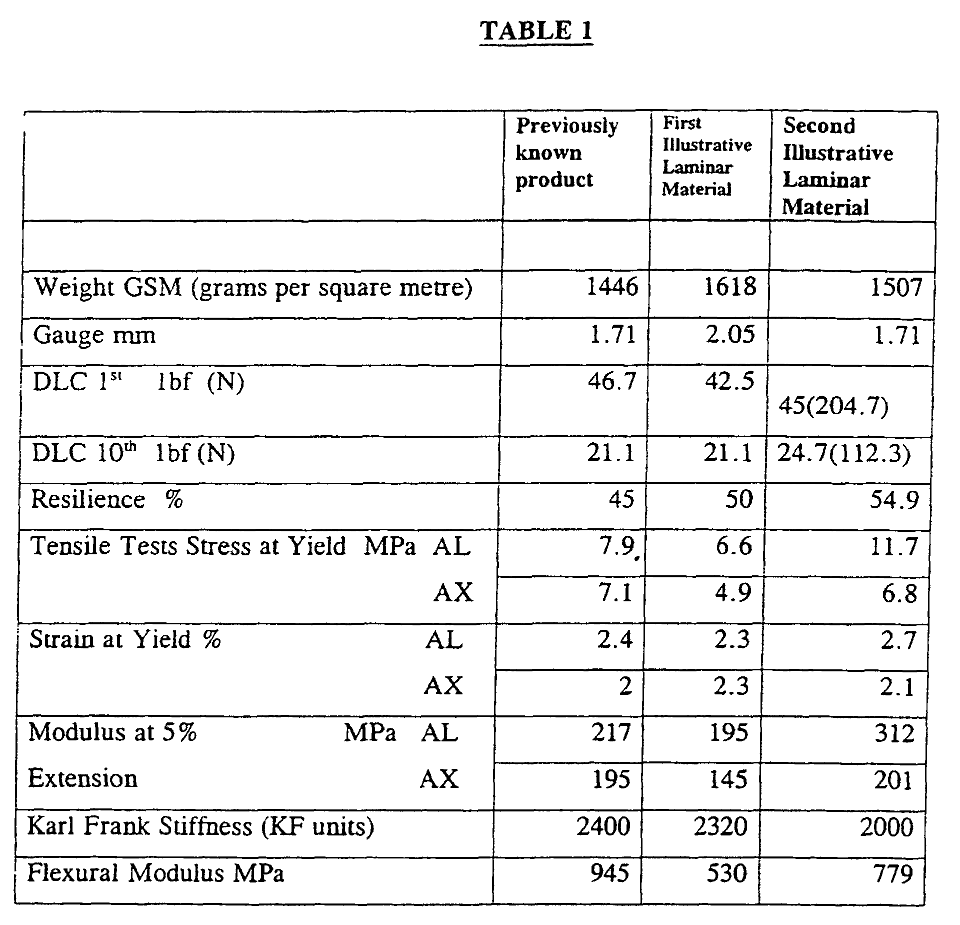

Whereas the compared products have roughly similar weights and performances, there are naturally some minor variations.

## Claims

1. A laminar material suitable for use in the manufacture of shoes comprising an extruded thermoplastic sheet core (10) having laminated thereto on at least one side a fibre fabric layer (12), **characterised in that** the thermoplastic sheet core comprises a mixture of granulated scrap shoe stiffener material (16) with virgin extrudable thermoplastics material, the core including at least 40% by weight of extrudable thermoplastics material.

2. A laminar material according to Claim 1 wherein the fibre fabric layer (12) is a non-woven fabric.

3. A laminar material according to either one of Claims 1 and 2 wherein the fibre fabric layer (12) is impregnated with a polymeric thermoformable stiffening material.

4. A laminar material according to any one of the preceding claims wherein said at least one fabric layer has a coating (14) of hot melt adhesive on its surface remote from the thermoplastic core.

5. A laminar material according to any one of the preceding claims having a fibre fabric layer (12) laminated to both sides of the thermoplastic core.

6. A laminar material according to any one of the preceding claims comprising at least 40% by weight of virgin thermoplastics material.

7. A laminar material according to any one of the preceding claims wherein the shoe stiffener material which is granulated to provide the scrap comprises a core (10) of extruded thermoplastics sheet material having laminated to both sides a fibre fabric layer (12) impregnated with a polymeric stiffening material (16), the fabric layers each having a heat-activatable adhesive coating (14).

8. A laminar material according to any one of Claims I to 6 wherein the material (16) which is granulated to provide the scrap has the same general construction and composition as the laminar material.

9. A laminar material according to either one of Claims 7 and 8 wherein the virgin thermoplastics polymeric material is substantially the same as the extrudable thermoplastics material in the core (10) of the scrap shoe stiffener material.

10. A laminar material according to any one of Claims I to 9 wherein the core (10) comprises from 30 to 50% by weight of the total weight of the laminar material.

11. A shoe toe or heel end stiffener including a laminar material according to any one of Claims 1 to 10.

12. A shoe insole including a laminar material according to any one of Claims 1 to 10.

13. A method of making a laminar material comprising the steps of:-
(i) procuring a scrap shoe stiffener material
(ii) granulating the scrap material
(iii) mixing the granulated scrap material with virgin thermoplastics material sufficient to provide at least 40% by weight of extruded thermoplastics material
(iv) melting the virgin thermoplastics material and thermoplastics material in the scrap and extruding the molten mixture of virgin thermoplastics material and scrap material to form a thermoplastic sheet core (10); and
(v) laminating a fibre fabric with the mixture as it is extruded to form the sheet core whereby to provide a fibre fabric layer (12) on at least one surface of the core.

14. A method according to Claim 13 comprising the further steps of:
(vi) impregnating the fibre fabric layer or layers of the laminate produced by step (v) with a polymeric thermoformable stiffening material in fluid form; and
(vii) drying, cooling or curing the fluid impregnant material to provide a thermoformable stiffening material (16) impregnating the fibre fabric layers (12).

15. A method according to either one of Claims 13 and 14 comprising the further step of:-
(viii) applying a coating of a hot melt adhesive composition (14) to the surface of the fibre fabric layer or layers.

16. A laminar material according to any one of Claims 1 to 10 made by a method according to any one of Claims 13 to 15.

## Patentansprüche

1. Laminares Material, geeignet für die Verwendung bei der Herstellung von Schuhen, umfassend einen stranggepressten Thermoplastfolienkern (10) mit einer auf wenigstens eine Seite geschichteten Fasergewebelage (12), **dadurch gekennzeichnet, dass** der Thermoplastfolienkern ein Gemisch aus granuliertem Schuhsteife-Altmaterial (16) mit frischem strangpressbarem Thermoplastmaterial umfasst, wobei der Kern wenigstens 40 Gew.-% an strangpressbarem Thermoplastmaterial beinhaltet.

2. Laminares Material nach Anspruch 1, bei dem die Fasergewebelage (12) ein Vliesstoff ist.

3. Laminares Material nach Anspruch 1 oder 2, bei dem die Fasergewebelage (12) mit einem polymeren, wärmeformbaren Steifematerial imprägniert ist.

4. Laminares Material nach einem der vorherigen Ansprüche, bei dem die genannte wenigstens eine Gewebelage eine Beschichtung (14) aus Schmelzklebstoff auf ihrer Oberfläche fern von dem Thermoplastkern hat.

5. Laminares Material nach einem der vorherigen Ansprüche mit einer Fasergewebelage (12), die auf beide Seiten des Thermoplastkerns geschichtet ist.

6. Laminares Material nach einem der vorherigen Ansprüche, umfassend wenigstens 40 Gew.-% frisches Thermplastmaterial.

7. Laminares Material nach einem der vorherigen Ansprüche, bei dem das Schuhsteifematerial, das zum Bereitstellen des Altmaterials granuliert ist, einen Kern (10) aus stranggepresstem Folienmaterial umfasst, auf dessen beide Seiten eine Fasergewebelage (12) geschichtet ist, die mit einem polymeren Steifematerial (16) imprägniert ist, wobei die Gewebelagen jeweils eine hitzeaktivierbare Klebstoffbeschichtung (14) haben.

8. Laminares Material nach einem der Ansprüche 1 bis 6, bei dem das Material (16), das zum Bereitstellen des Altmaterials granuliert wurde, dieselbe allgemeine Konstruktion und Zusammensetzung hat wie das laminare Material.

9. Laminares Material nach Anspruch 7 oder 8, wobei das frische polymere Thermoplastmaterial im Wesentlichen dasselbe ist wie das strangpressbare Thermoplastmaterial in dem Kern (10) des Schuhsteife-Altmaterials.

10. Laminares Material nach einem der Ansprüche 1 bis 9, bei dem der Kern (10) 30 bis 50 Gew.-% des Gesamtgewichts des laminaren Materials umfasst.

11. Schuhspitzen- und Fersenendsteife mit einem laminaren Material nach einem der Ansprüche 1 bis 10.

12. Schuhbrandsohle mit einem laminaren Material nach einem der Ansprüche 1 bis 10.

13. Verfahren zur Herstellung eines laminaren Materials, umfassend die folgenden Schritte:
(i) Beschaffen eines Schuhsteife-Altmaterials,
(ii) Granulieren des Altmaterials,
(iii) Mischen des granulierten Altmaterials mit frischem Thermoplastmaterial, so dass wenigstens 40 Gew.-% an stranggepresstem Thermoplastmaterial entstehen,
(iv) Schmelzen des frischen Thermoplastmaterials und des Thermoplastmaterials in dem Altmaterial und Strangpressen des geschmolzenen Gemischs aus frischem Thermoplastmaterial und Altmaterial zum Bilden eines Thermoplastfolienkerns (10); und
(v) Laminieren eines Fasergewebes mit dem Gemisch, während dieses zur Bildung des Folienkerns stranggepresst wird, um dadurch eine Fasergewebelage (12) auf wenigstens einer Oberfläche des Kerns zu erzeugen.

14. Verfahren nach Anspruch 13, ferner umfassend die folgenden Schritte:
(vi) Imprägnieren der Fasergewebelage(n) des in Schritt (v) erzeugten Laminats mit einem polymeren wärmeformbaren Steifematerial in Fluidform; und
(vii) Trocknen, Kühlen oder Vulkanisieren des fluiden Imprägniermaterials, um ein wärmeformbares Steifematerial (16) zu erhalten, das die Fasergewebelagen (12) imprägniert.

15. Verfahren nach Anspruch 13 oder 14, ferner umfassend die folgenden Schritte:
(viii) Auftragen einer Beschichtung aus einer Schmelzklebstoffzusammensetzung (14) auf die Oberfläche der Fasergewebelage(n).

16. Laminares Material nach einem der Ansprüche 1 bis 10, hergestellt mit einem Verfahren nach einem der Ansprüche 13 bis 15.

## Revendications

1. Un matériau laminaire convenant pour utilisation dans la fabrication des chaussures comprenant un noyau en feuilles thermoplastique extrudé (10), une couche de tissu fibres (12) étant laminée sur ce dernier sur au moins un côté, **caractérisé en ce que** le noyau en feuilles thermoplastique comprend un mélange de matériau raidisseur de chaussure rebut granulé (16) et de matériau thermoplastique extrudable vierge, le noyau comportant au moins 40% en poids de matériau thermoplastique extrudable.

2. Un matériau laminaire conformément à la revendication 1 dans quoi la couche de tissu fibres (12) est un tissu non tissé.

3. Un matériau laminaire conformément à l'une ou l'autre des revendications 1 et 2 dans quoi la couche de tissu fibres (12) est imprégnée d'un matériau raidisseur thermoformable polymère.

4. Un matériau laminaire conformément à l'une quelconque des revendications précédentes dans quoi ladite au moins une couche de tissu a un revêtement (14) de hot-melt sur sa surface loin du noyau thermoplastique.

5. Un matériau laminaire conformément à l'une quelconque des revendications précédentes ayant une couche de tissu fibres (12) laminée sur les deux côtés du noyau thermoplastique.

6. Un matériau laminaire conformément à l'une quelconque des revendications précédentes comprenant au moins 40% en poids de matériau thermoplastique vierge.

7. Un matériau laminaire conformément à l'une quelconque des revendications précédentes dans quoi le matériau raidisseur de chaussure qui est granulé pour fournir le rebut comprend un noyau (10) de matériau en feuilles thermoplastique extrudé, une couche de tissu fibres (12) étant laminée sur les deux côtés, imprégnée d'un matériau raidisseur polymère (16), les couches de tissu ayant chacune un revêtement adhésif réactivable par la chaleur (14).

8. Un matériau laminaire conformément à l'une quelconque des revendications 1 à 6 dans quoi le matériau (16) qui est granulé pour fournir le rebut a la même construction générale et la même composition générale que le matériau laminaire.

9. Un matériau laminaire conformément à l'une ou l'autre des revendications 7 et 8 dans quoi le matériau polymère thermoplastique vierge est substantiellement le même que le matériau thermoplastique extrudable dans le noyau (10) du matériau raidisseur de chaussure rebut.

10. Un matériau laminaire conformément à l'une quelconque des revendications 1 à 9 dans quoi le noyau (10) comprend entre 30 et 50% en poids du poids total du matériau laminaire.

11. Un raidisseur extrémité bout ou talon de chaussure comportant un matériau laminaire conformément à l'une quelconque des revendications 1 à 10.

12. Une semelle de chaussure comportant un matériau laminaire conformément à l'une quelconque des revendications 1 à 10.

13. Une méthode pour fabriquer un matériau laminaire comprenant les étapes suivantes :
(i) l'approvisionnement d'un matériau raidisseur de chaussure rebut
(ii) la granulation du matériau rebut
(iii) le mélangeage du matériau rebut granulé avec du matériau thermoplastique vierge suffisant pour fournir au moins 40% en poids de matériau thermoplastique extrudé
(iv) la fusion du matériau thermoplastique vierge et du matériau thermoplastique dans le rebut et l'extrusion du mélange fondu de matériau thermoplastique vierge et de matériau rebut pour former un noyau en feuilles thermoplastique (10) ; et
(v) la lamification d'un tissu fibres avec le mélange au fur et à mesure qu'il est extrudé pour former le noyau en feuilles grâce à quoi sera fournie une couche de tissu fibres (12) sur au moins une surface du noyau.

14. Une méthode conformément à la revendication 13 comprenant les autres étapes suivantes :
(vi) l'imprégnation de la couche ou des couches de tissu fibres du lamifié produit par l'étape (v) d'un matériau raidisseur thermoformable polymère sous forme fluide ; et
(vii) le séchage, le refroidissement ou le durcissement du matériau imprégnant fluide pour fournir un matériau raidisseur thermoformable (16) imprégnant les couches de tissu fibres (12).

15. Une méthode conformément à l'une ou l'autre des revendications 13 et 14 comprenant l'autre étape suivante:
(viii) l'application d'un revêtement d'une composition hot-melt (14) sur la surface de la couche ou des couches de tissu fibres.

16. Un matériau laminaire conformément à l'une quelconque des revendications 1 à 10 fabriqué suivant une méthode conformément à l'une quelconque des revendications 13 à 15.
